# EUROPEAN PATENT APPLICATION

(11) **EP 4 046 501 A1**
(43) Date of publication of application: **24.08.2022**
(21) Application number: 20877257.4
(22) Date of filing: 19.10.2020
(51) Int. Cl.: A23N 1/00, A47J 19/02

(54) **AUTOMATIC JUICER**

(30) Priority: 18.10.2019 ES 201931711 U
(71) Applicant: Zumex Group S.A., 46113 Moncada (ES)
(72) Inventor: RAYO CASCO, Fernando, 46113 Moncada (ES); VEGA, Jesús, 46113 Moncada (ES)
(74) Representative: Elzaburu S.L.P.
(86) International application number: PCT/ES2020/070638
(87) International publication number: WO 2021/074479

(57) **Abstract**

1. Automatic juicer machine (1), comprising a fruit squeezing unit (2) with two male drums (3) and two female drums (4) with synchronised rotary movement, the squeezing unit (2) being fixed to a rear frame (5), wherein the frame (5) comprises a photoelectric sensor (6) located between the upper edge of the female drum (4) that is fed with fruit and the upper edge of the frame (5), closer to the upper edge of the female drum (4) that is fed with fruit than the upper edge of the frame (5).

## Description

### Field of the invention

The present invention relates to an automatic juicer machine, of those in which the juice is produced in a squeezing unit formed by male drums and female drums.

### Background of the invention

In supermarkets, it is common to see automatic juicing machines that allow the user to obtain freshly squeezed juice, usually orange juice.

These machines can have different configurations, the most common being the one that employs a squeezing unit with two female drums with an inner hollow space with a central axis, which can rotate in the opposite direction, and with holes to accommodate the fruit to be squeezed, and two male drums with an inner hollow space with a central axis, located below the female drums, so that each male drum can rotate in the opposite direction to the corresponding female drum located above it, the male drums comprising ball-shaped projections that can be coupled over the holes of the female drums to squeeze the juice.

In these juicer machines it is necessary to precisely count the squeezed fruits that will normally be oranges, although they can also be other citrus fruits or other fruits from which juice can be obtained, such as pomegranates.

In these machines, it is necessary to obtain precise and as accurate information as possible on the number of fruits squeezed, since such information can be useful for the maintenance of the machine or to determine its performance.

Indirect systems are currently used to calculate the number of fruits squeezed at a given time, such as the energy consumed by the machine, but these systems are not very accurate.

### Summary of the invention

The purpose of the present invention is, therefore, to provide an automatic juicer machine which makes it possible to reliably count the squeezed fruits.

The invention provides an automatic juicer machine, comprising a squeezing unit with two male drums and two female drums with synchronised rotary movement, the squeezing unit fixed to a rear frame, and wherein the frame comprises a photoelectric sensor located between the upper edge of the female drum that is fruit-fed and the upper edge of the frame, closer to the upper edge of the female drum that is fruit-fed than the upper edge of the frame.

By means of this configuration with a photoelectric sensor it is possible to perform an exact count of the fruits that pass through the machine to be squeezed.

Other advantageous embodiments of the invention are set forth in the dependent claims.

### Brief description of the drawings

What follows is a non-limiting illustration of the subject matter of the present invention, making reference to the accompanying drawings, wherein:
Figure 1 shows a front view of an automatic juicer machine of the invention.

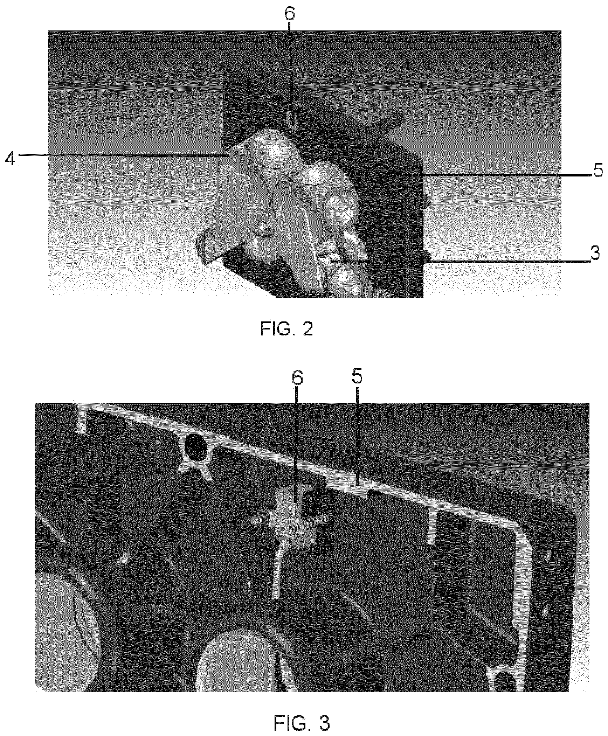

Figure 2 shows a detail of the automatic juicer machine of the invention.
Figure 3 shows a detail of the back of the automatic juicer machine of the invention.

### Detailed description of the invention

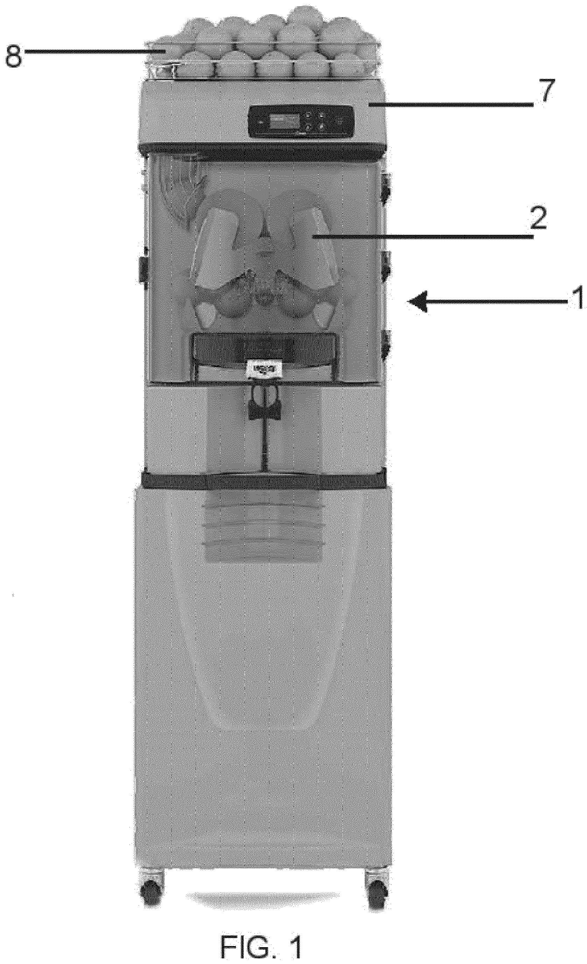

A front view of an automatic juicer machine 1 of the invention is shown in Figure 1. This machine 1 has a squeezing unit 2 with two male drums 3 and two female drums 4 with synchronised rotary motion. The squeezing unit 2 is fastened to a rear frame 5, from which its front surface can be seen. A photoelectric sensor 6 is observed at the top of the frame 5. This photoelectric sensor 6 is located in the space between the upper edge of the frame 5 and the upper edge of the female drum 4 that is fed with fruit (in Figure 1, the female drum 4 is on the left). In order for the fruit to be detected by the photoelectric sensor 6, it needs to be close to the upper edge of the female drum 4 which is fed with fruit and slightly above it. Specifically, the photoelectric sensor 6 is closer to the upper edge of the female drum 4 that is fed with fruit than to the upper edge of the frame 5. The distance from the upper edge of the female drum 4 that is fed with fruit to the photoelectric sensor 6 cannot be greater than the radius of the fruit (in case of assimilating the fruit to a sphere), since otherwise the fruit would not cover the photoelectric sensor 6.

Thus, when the machine 1 is fed with a fruit that comes from the fruit feeder 8 located at the top, the fruit is located in the hollow space of the female drum 4 closest to the outlet of the fruit feeder 8 and rotates with this female drum 4. The photoelectric sensor 6, located behind it, is covered when the fruit passes in front of it, thus meaning that a count can take place. In this way it is possible to accurately count the number of fruits squeezed by the machine 1.

This count may be total (to know the fruits that have been squeezed by the machine 1 during its entire useful life) or partial.

The photoelectric sensor 6 may be a self-reflecting photocell, in which the light emitter and the receiver are within the same housing. The light emitted by the light emitter of the self-reflecting photocell affects the detected fruit and is reflected. The receiver captures that reflected light, thus meaning that a count can take place of the fruits that pass through the squeezing unit 2.

The information on the number of squeezed fruits can be used to implement a payment model where the user pays according to the number of squeezed fruits. For example, the machine may incorporate a cashless payment system 7 and means of connection between the photoelectric sensor 6 and the cashless payment system 7. The user can pay directly on the machine 1 using a system that does not use cash (for example, by credit card or mobile phone) thus obtaining credit to be able to squeeze a certain number of fruits.

Although some embodiments of the invention have been described and represented, it is evident that modifications within its scope can be introduced therein, and this should not be considered limited to said embodiments, but only to the content of the following claims.

## Claims

1. Automatic juicer machine (1), comprising a fruit squeezing unit (2) with two male drums (3) and two female drums (4) with synchronised rotary movement, the squeezing unit (2) being fixed to a rear frame (5), **characterised in that** the frame (5) comprises a photoelectric sensor (6) located between the upper edge of the female drum (4) that is fed with fruit and the upper edge of the frame (5), closer to the upper edge of the female drum (4) that is fed with fruit than the upper edge of the frame (5).

2. Automatic juicer machine (1), according to claim 1, wherein the photoelectric sensor (6) is a self-reflecting photocell.

3. Automatic juicer machine (1) according to any of the preceding claims, comprising a cashless payment system (7) and connection means between the photoelectric sensor (6) and the cashless payment system (7).

## Amended claims

### Amended claims under Art. 19.1 PCT

1. Automatic juicer machine (1), comprising a fruit squeezing unit (2) with two male drums (3) and two female drums (4) with synchronised rotary movement, the squeezing unit (2) being fixed to a rear frame (5), the frame (5) comprising a photoelectric sensor (6), **characterised in that** the photoelectric sensor (6) is located between the upper edge of the female drum (4) that is fed with fruit and the upper edge of the frame (5), closer to the upper edge of the female drum (4) that is fed with fruit than the upper edge of the frame (5).

2. Automatic juicer machine (1), according to claim 1, wherein the photoelectric sensor (6) is a self-reflecting photocell.

3. Automatic juicer machine (1) according to any of the preceding claims, comprising a cashless payment system (7) and connection means between the photoelectric sensor (6) and the cashless payment system (7).

Statement under Art. 19.1 PCT
The new claim 1 meets the requirements of novelty, inventive step and industrial application.

None of the documents retrieved in the International Search Report anticipates all the characteristics of the new claim 1. None of said documents, alone or in combination with others, allows reaching the invention defined by the new claim 1. Furthermore, in the documents recovered there are no suggestions that direct the person skilled in the art towards said invention.
